# EUROPEAN PATENT SPECIFICATION

(11) **EP 0 956 885 B1**
(45) Date of publication and mention of the grant of the patent: **23.08.2006**
(21) Application number: 99303590.6
(22) Date of filing: 07.05.1999
(51) Int. Cl.: A63B 53/14, A01K 87/08, B25G 1/10

(54) **Grip and method of manufacturing the grip**
Griff sowie Verfahren zu seiner Herstellung
Poignée et son procédé de fabrication

(30) Priority: 12.05.1998 JP 12912098
(43) Date of publication of application: 17.11.1999
(73) Proprietor: SHIMANO INC., Osaka 590-8577 (JP)
(72) Inventor: Yasui, Toshihiko, Tondabayashi-shi, Osaka (JP); Lu, Wong Chen, Suzhou Champion Corkwood Sponge Co., Wu County, Jiang Su Province (CN)
(74) Representative: Murnane, Graham John

(56) References cited:
- WO-A-93/16847
- FR-A- 2 337 995
- GB-A- 122 270
- GB-A- 2 124 089
- US-A- 2 560 420
- US-A- 4 373 718
- US-A- 4 698 893
- US-A- 5 792 551

## Description

### BACKGROUND OF THE INVENTION

### A. Field of the Invention

The present invention relates to a cork grip and method of manufacturing the grip, the grip being for use on a handle or grip portion of an implement, and in particular for use on the handle or grip portion of a sports related implement such as a fishing rod or a golf club.

### B. Description of the Background Art

Cork is a protective layer of cells that deposit in layers near the outer surface of all wood producing plants. Cork is a light and highly elastic material, and exhibits excellent resistance against heat, electricity, sound, water and the like. In recent years use of cork materials for grip portions of golf clubs, tennis rackets, and other sports related implements has grown.

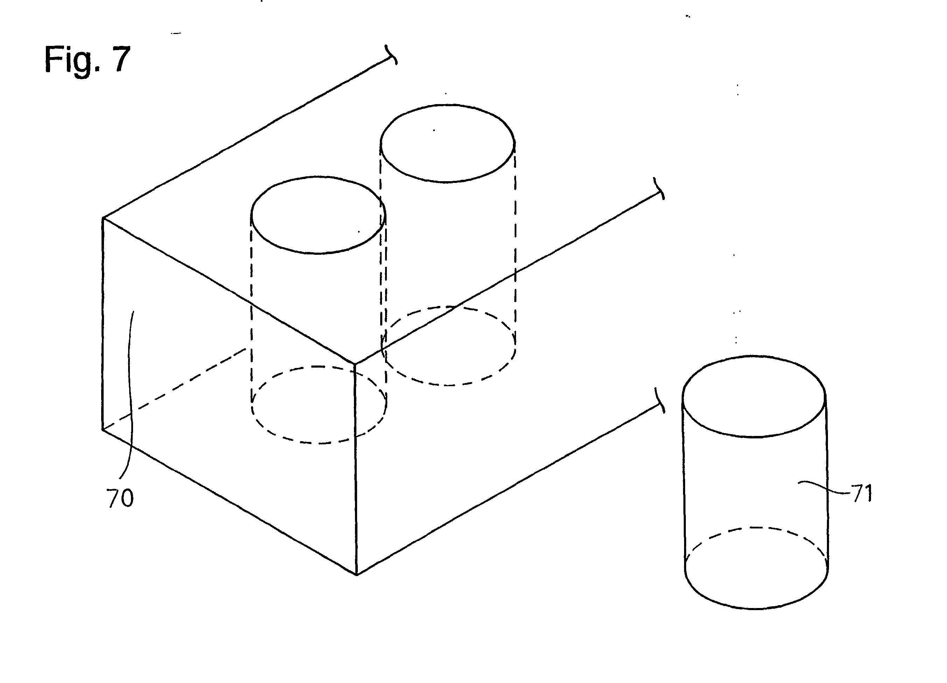

A cork grip for a sports related implement is typically formed, as shown in Fig. 7, by punching out a cork piece 71 having a predetermined cylindrical shape from a cork plate 70. Such a cork plate 70 is typically obtained by stripping a tree of its bark, process the bark by pressing the bark into a flat board shape. Thereafter, the cork pieces 71 may be punched out.

Cork is an organic material produced by nature, and as such, does not always have consistent or homogeneous qualities. In general, commercially available cork is classified based on the overall quality or fineness of the texture of porous substances. Specifically, cork material is a porous substance and is graded on the quality of its overall texture. For instance, a fine texture having excellent overall uniform consistency is considered the best and is classified as high grade or high quality. Cork materials that are not uniform, are progressively rougher, and have inconsistent texture are graded or classified accordingly as less than high grade.

A handle or grip manufactured using a high grade or high quality cork material having the finest texture is typically fully elastic, has an attractive overall appearance, and provides a user with a comfortable, yet firm gripping feeling when held by the user. However, cork classified as high grade or high quality, is available only in a small finite quantities and is generally very expensive. Hence, such cork is generally used mainly for stoppers in wine bottles and the like. Such high grade cork is not typically used on the grip or handle portion of fishing rods, golf clubs, or other sports related implements for several reasons, including cost. The availability of the small finite quantities of high quality cork, in particular, is a big factor that prevents high quality cork from being used as a grip material in mass produced implements. A grip according to the preamble of claim 1 is known from GB 122 270 and US-A- 4 698 893.

### SUMMARY OF THE INVENTION

An object of the present invention is to provide a handle portion or grip portion of an implement with a cork material having a desirable elasticity, a beautiful appearance and an excellent grip feeling at a relatively inexpensive cost, using limited quantities of high quality cork.

This object is solved by the characteristics presented in claim 1 and by the characteristics presented in the method described in claim 12.

In accordance with one aspect of the present invention, a grip for a handle portion of an implement includes a base layer fixable to the handle portion of the implement, the base layer being formed of a first cork material. An outer layer is fixed to an outer peripheral surface of the base layer, the outer layer being smooth and formed of a second cork material. The second cork material is cork having a grade that is higher than the grade of the first cork material.

Preferably, wherein the second cork material is wound in a spiral pattern about the outer peripheral surface of the base layer.

Preferably, wherein the second cork material is wound around the outer peripheral surface of the base layer forming at least one cylinder of the second cork material about the outer peripheral surface of the base layer.

Preferably, the implement is a sports related implement.

Preferably, the implement is a golf club.

Preferably, the implement is a fishing rod.

In another aspect of the present invention, a sports related implement includes a handle portion defined on a rod-like portion of the implement. A grip is formed on the handle portion, the grip: includes a base layer of cork fixed to the handle portion, the base layer being formed of a first cork material; and an outer layer fixed to an outer peripheral surface of the base layer, the outer layer being smooth and formed of a second cork material. The second cork material is cork having a grade that is higher than the grade of the first cork material.

Preferably, the second cork material is wound in a spiral pattern about the outer peripheral surface of the base layer.

Preferably, the second cork material is wound around the outer peripheral surface of the base layer forming at least one cylinder of the cork material about the outer peripheral surface of the base layer.

Preferably, the implement is a golf club.

Preferably, the implement is a fishing rod.

In accordance with another aspect of the present invention, a method for forming a grip on a handle portion of an implement includes: forming a base layer from a first cork material into a cylinder-like shaped member; forming a sheet of cork material from a second cork material; and wrapping the second cork material around the base layer and bonding the second cork material to the base layer to form a smooth outer layer. The second cork material is made of a higher grade of cork than the grade of the first cork material.

Preferably, in the step for forming the base layer, a plurality of cylinder-like shaped members are adhered to each other in an axial direction to form the base layer having a cylindric shape.

Preferably, in the step for forming the sheet of cork material from the second cork material includes a step of forming the sheet into a ribbon of cork material, and in the wrapping step, the ribbon of cork material is wound around the base layer in a spiral pattern.

In the present invention, the outer layer of high-grade cork is wound around and fixed to the outer peripheral surface of the base layer. As a result, the grip is highly flexible and exhibits an excellent grip feel when held. Further, the grip has an attractive, natural appearance and an improved design. Inexpensive cork material of low grade available in relatively large quantities is used to manufacture the base layer, while high grade cork that is generally more expensive and is available in limited quantities, is used to form only the outer layer.

The high grade cork used for making the outer layer is selected in accordance with the grade of a product or implement being produced. Specifically, the grade of cork used for the outer layer is selected based upon desired appearance and quality of the fishing rod and/or golf club being manufactured. Cork of a high grade typically used for cork stoppers of wine bottles and the like may be used, or cork of the best available quality may be used, for example.

These and other objects, features, aspects and advantages of the present invention will become more fully apparent from the following detailed description of the present invention when taken in conjunction with the accompanying drawings where like reference numerals denote corresponding parts throughout.

### BRIEF DESCRIPTION OF THE DRAWINGS

Figs. 1A and 1B are side views which provide an overall view of a fishing rod according to a first preferred embodiment of the present invention where part of the fishing rod is shown in Fig. 1A and the remainder of the fishing rod is shown in Fig. 1B;
Figs. 2A and 2B are enlarged views of a portion of the fishing rod depicted in Figs. 1A and 1B, showing a butt grip 4 in Fig. 2A and a front grip 6 in Fig. 2B;
Figs. 3A and 3B are views showing manufacturing steps of a base layer of the butt grip 4 and front grip 6 depicted in Figs. 1A, 2A and 2B;
Figs. 3C and 3D are perspective views showing manufacturing steps of an outer layer of the butt grip 4 and front grip 6 formed on the base layer depicted in Figs. 3A and 3B;
Fig. 4 is an overall view of a golf club in accordance with a second embodiment of the present invention;
Fig. 5 is an enlarged cross sectional view of a portion of the golf club depicted in Fig. 4 showing details of a grip 43;
Figs. 6A and 6B are side views showing manufacturing steps of the grip 43 depicted in Figs. 4 and 5;
Fig. 7 is a perspective view showing a cork being processed in a conventional manufacturing step to produce a cork grip; and
Fig. 8 is a block diagram showing various steps in a method of manufacturing grips for handle portions of implements in accordance with the present invention.

### DESCRIPTION OF THE PREFERRED EMBODIMENTS

### First Preferred Embodiment

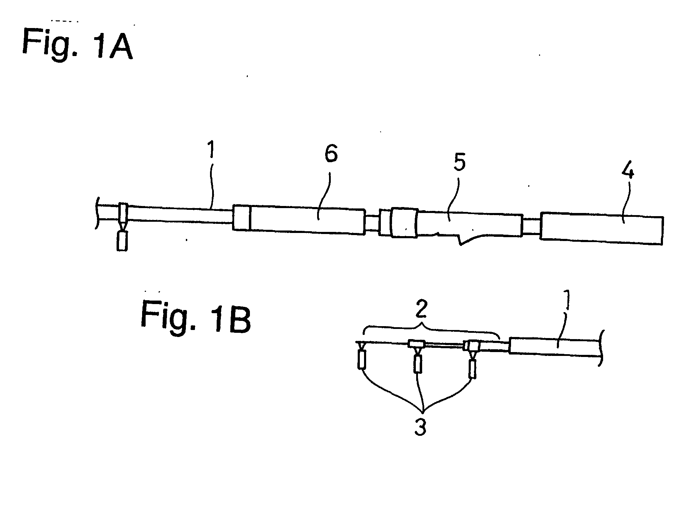

A first preferred embodiment of the present invention is described below with reference to Figs. 1A, 1B, 2A, 2B, 3A and 3B.

A fishing rod according to a first preferred embodiment of the present invention, as shown in Figs. 1A and 1B, includes an outer rod member 1 and an inner rod member 2. The inner rod member 2 includes a plurality of rod members that telescopically collapse within one another and can be housed in a collapsed state within the outer rod member 2. However, it should be understood that the present invention could also be used on an non-telescopic fishing rod. The outer rod member 1 at least partially hollow to receive the inner rod member 2. The outer rod member 1 (toward the right side of Fig. lA) defines a butt side and the inner rod member 2 (toward the left side of Fig. 1B) defines a tip side. The inner rod member 2 is insertable and housed within the outer rod member 1 in a collapsed state.

The inner rod member 2 includes a plurality of progressively smaller diameter rod members to provide the telescoping configuration. The inner rod member 2 and the outer rod member 1 each have a tapering cylindrical shape obtained by winding a prepreg material, such as a carbon fiber impregnated with a reinforced resin, around a mandrel and thereafter sintering the mandrel and prepreg. Further, a plurality of line guides 3 through which a fishing line can pass are disposed at predetermined intervals on the inner rod member 2 and the outer rod member 1.

The outer rod member 1 includes: a butt grip 4 that is formed at a butt side end of the outer rod member 1; a reel seat 5 that is disposed on the outer rod member 1 adjacent to the butt grip 4 and which is configured to support a fishing reel (not shown); and a front grip 6 which is disposed on a tip side of the outer rod member 1 adjacent to the reel seat 5. A fishing line (not shown) may extend from the reel (not shown) and be guided to the tip side of the inner rod member 2 by passing the fishing line through line guides 3.

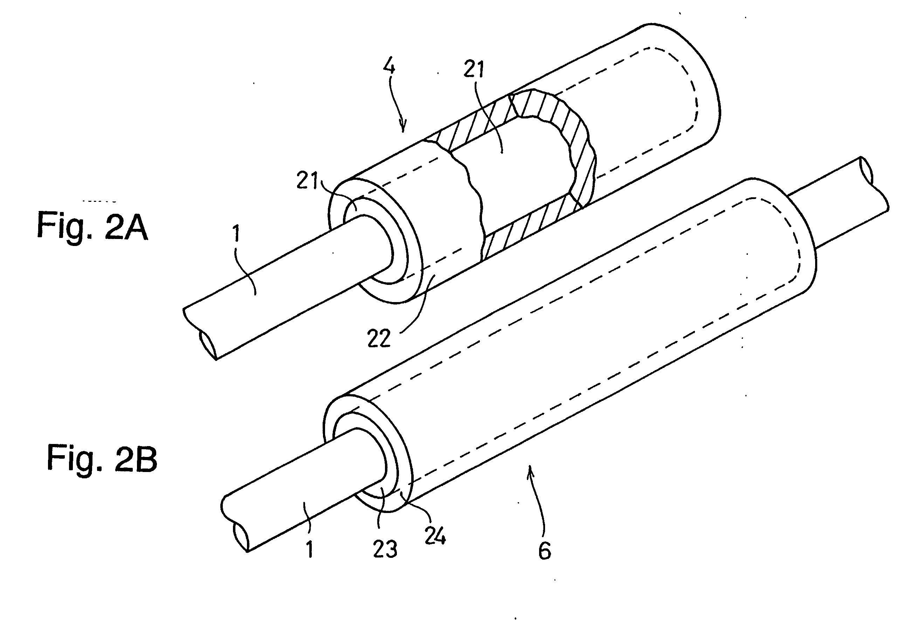

As shown in Fig. 2A, the butt grip 4 is a cylindrical member of cork closed at one end (right upper side of Fig. 2A), and is fitted to the butt side end of the outer rod member 1. The butt grip 4 includes a cylindrical base layer 21 of cork material into which the outer rod member 1 is inserted, and an outer layer 22 which is fixed on an outer peripheral surface of the base layer 21. The outer layer 22, described in greater detail below, is obtained by winding a ribbon-like material of cork around the outer peripheral surface of the base layer 21.

The base layer 21 is punched (or cut) with a predetermined cylindrical shape from a cork material that is obtained by peeling bark from a tree and pressing the bark into the shape of a board. The base layer 21 is obtained using cork that is classified as less than high grade, such as low grade cork which is customarily used for grips. When necessary, low grade cork may be produce with a gaps or irregularities that are filled with cork powder during processing. Alternatively, synthesized cork formed with a combination of cork powder and an appropriate binder may be used instead of low grade cork to make the base layer 21.

The outer layer 22 is formed from a ribbon-like cork member which is obtained by processing high grade cork that is of much finer quality than the low grade cork used to make the base layer 21. The cork used to make the outer layer 22 is formed into a thin ribbon, strip or sheet such that it may be laminated onto the base layer 21.

It should be understood that even within the category of high grade or high-quality cork classification, there are further varieties of cork grades. The quality of the cork determines the price of the cork. The quality of cork, such as the various high grade cork mentioned above, is selected in accordance with the grade of the product the cork is used on, such as the above described fishing rod or a golf club, which include a grip portion. The high grade cork typically used for cork stoppers of wine bottles and the like may be employed for the outer layer 22, or cork of quality comparable to the best cork may be used, for example.

As shown in Fig. 2B, the front grip 6 is a cylindrical member of cork that is fit to the outer rod member 1 at a predetermined position, as shown in Fig. 1A. Like the butt grip 4, the front grip 6 includes a cylindric base layer 23 of cork into which the outer rod member 1 is inserted, and an outer layer 24 which is formed on an outer peripheral surface of the base layer 23. The front grip 6 is therefore structured generally the same as the butt grip 4. In other words, the base layer 23 is formed of a grade of cork that is less than high grade, for instance a low grade of cork may be used. The outer layer 24 is made of a high grade of cork.

various ways of making the outer layers 22 and 24 are described in greater detail below.

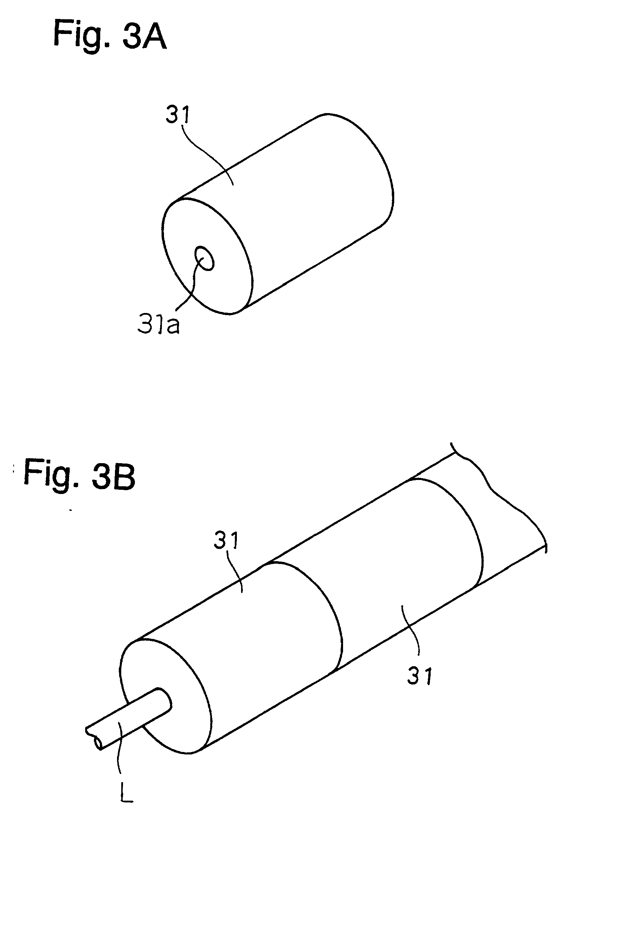

First, as shown in Fig. 3A, a cork material which is obtained as follows. Bark is stripped from a tree and pressed into the shape of a cork board. A base cork member 31 is cut or punched out of the board to define a predetermined cylindrical shape, thereby obtaining the base cork member 31. The cork board used to form the base cork member 31 preferably is of a quality less that high grade, and preferably is made of a low grade cork which is less expensive that high grade cork material. A through hole 31a is thereafter formed at through a center of the base cork member 31 such that the through hole 31a penetrates the base cork member 31 in an axial direction.

Thereafter, as shown in Fig. 3B, a bar shaft L is inserted into the through holes 31a of a plurality of such base cork members 31, whereby the plurality of base cork members 31 sequentially contact each other in the axial direction. The plurality of base cork members 31 are thereafter bonded or otherwise adhered to each other by an adhesive or the like to thereby form a continuous, cylindric extended rod-like member of cork material. It is not necessary for the rod-like member depicted in Fig. 3B made up of the plurality of base cork members 31 to perfect. For instance, the base cork members 31 depicted in Fig. 3B may define an outer peripheral surface that has chips, small gaps or inconsistencies on it. Such gaps, missing chips or other inconsistencies can be filled in and/or smoothed out by minor processing, where necessary, to form a generally uniform surface. Alternatively, the base cork members 31 may be processed to fill in gaps or inconsistencies prior to installation of the bar shaft L.

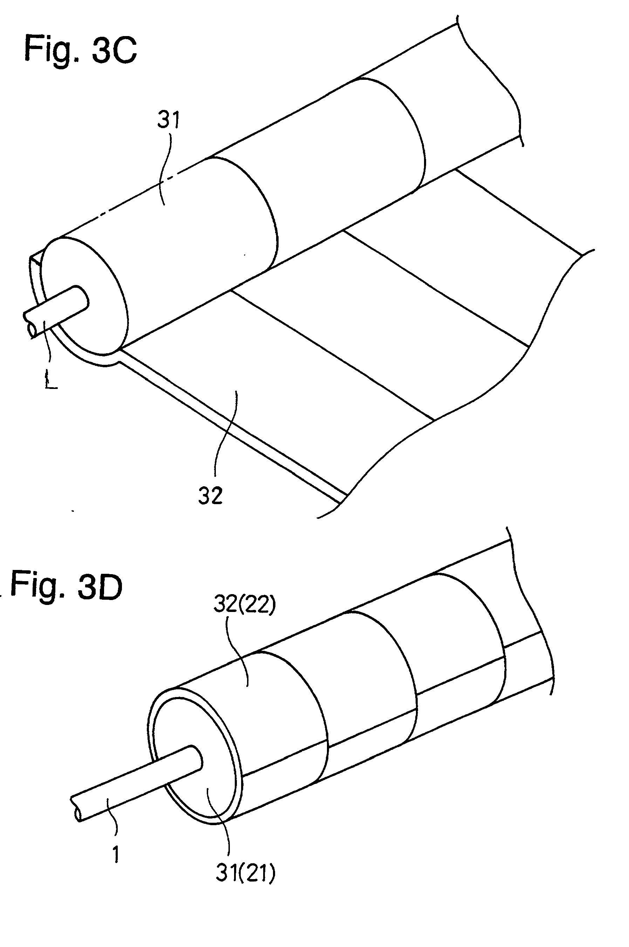

Next, plate-like cork material is obtained by peeling bark off a tree and pressing the bark into the flat board shape of high grade cork. The boards of high grade cork are thereafter processed into the shape of a ribbon to form a cork ribbon member 32. A plurality of the cork ribbon members 32 are arranged side by side and are wound around the base cork members 31 to form an outer cylinder of cork material around the bar shaft L. The cork ribbon members 32 are precisely cut so that ends thereof join to form a smooth joint. The cork ribbon members 32 are bonded and fixed by an adhesive or the like, as shown in Fig. 3C, to the base cork members 31.

It should be understood that the cork ribbon members 32 are a laminate material covering the base cork members 31. It should further be understood that, alternatively, a single, wide cork ribbon member 32 may be laminated to the base cork members 31. Further, it should be understood that when a plurality of cork ribbon members 32 are used side by side, as shown in Fig. 3C, the cork ribbon members 32 may be adhered together in side by side relationship or may be glued together at the time the cork ribbon members 32 are wound around the base cork members 31.

As shown in Fig. 3D, after processing outer peripheral surfaces of the cork ribbon members 32, the bar shaft L is removed, the rod-like member made of members 31 and 32 is cut into a predetermined length thereby forming the butt grip 4, and butt grip 4 may be installed on the outer rod member 1. The base cork members 31 of the butt grip 4 define the base layer 21 and the cork ribbon members 32 of the butt grip 4 define the outer layer 22, as is indicated in Fig. 3D. The thickness of the cork ribbon members 32 which form the outer layer 22 is preferably in the range of about 1 - 10 mm. When considering the desired elasticity of a grip, the strength and a cost of the outer layer 22, the thickness of the outer layer 22 is preferably about 2- 7 mm, and more preferably about 3 - 4 mm. It should be understood that cover members covering axial end surfaces of the butt grip 4 may be fixed to the both axial ends of the butt grip 4.

The front grip 6 is manufactured in a similar manner to the butt grip 4. Therefore, in the description above, reference to the butt grip 4 could be substituted with references to the front grip 6. To avoid repetition, description of the front grip 6 is not provided, but rather, the above description of the formation of the butt grip 4 applies to formation of the front grip 6 as well.

Specifically, the butt grip 4 and the front grip 6 have generally the same structural configuration, wherein outer cork layers 22 and 24 are both made of high grade cork which are wound around and fixed to the outer peripheral surfaces of respective base layers 21 and 23. The butt grip 4 and the front grip 6 therefore each have a superior elasticity and provide an excellent gripping feeling when held. Further, the butt grip 4 and the front grip 6 have beautiful appearances and improved designs. In addition, the outer layers 22 and 24 are formed by the cork ribbon members 32 which are obtained by processing cork into sheets, and therefore, it is easy to manufacture the butt grip 4 and the front grip 6. Since the cork ribbon members 32 are high grade cork which is processed into relatively short sheets, it is possible to economically use high grade cork which is available only in small finite quantities, and hence, to manufacture the butt grip 4 and the front grip 6 in an easy, cost effective manner.

### Second Preferred Embodiment

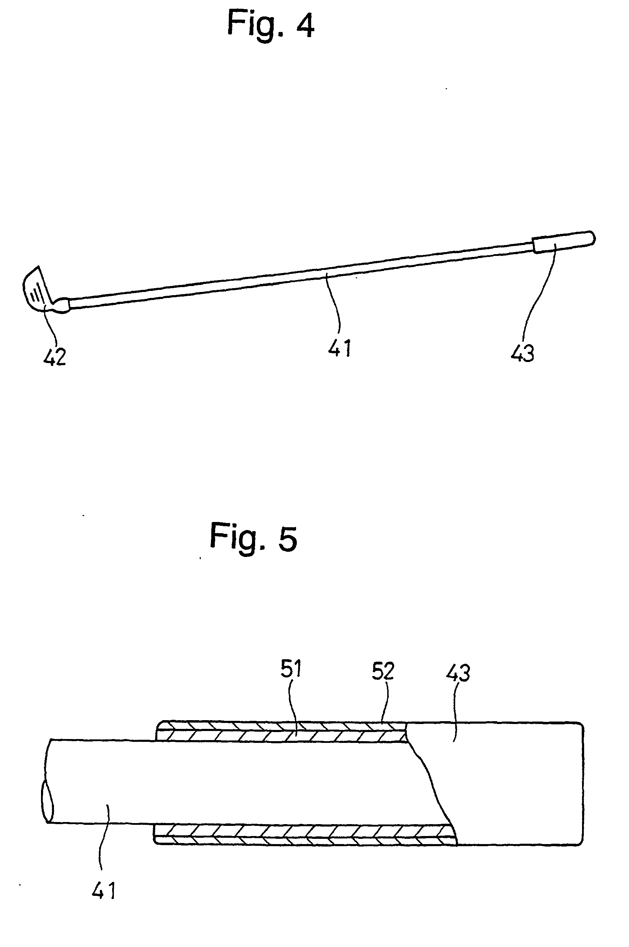

A second preferred embodiment of the present invention is described below with respect to Figs. 4, 5, 6A and 6B.

A golf club according to the second preferred embodiment of the present invention, as shown in Fig. 4, includes a shaft 41, a head 42 disposed at one end of the shaft 41, and a grip 43 which is disposed at the other end of the shaft 41. It should be understood that the head 42 may be an iron, a wood or a putter, depending upon the type of golf club. The cork grip configuration of the present invention may be installed on any golf club.

The shaft 41 is a cylindrical member made of a reinforced resin which is reinforced with a carbon fiber, a glass fiber, etc. A surface of the shaft 41 is coated in any of a variety of manners in accordance with desired appearance or specific properties necessary from the golf club.

As shown in Fig. 5, the grip 43 is a cylindrical member of a cork which is fit into and bonded by an adhesive to the end of the shaft 41. The grip 43 includes a column-like base layer 51 of cork into which the shaft 41 is inserted, and an outer layer 52 which is formed on an outer peripheral surface of the base layer 51. The base layer 51 is formed in a predetermined cylindrical shape from a cork material which is obtained by peeling bark from a tree and then pressing the bark into the shape of a board. The base layer 51 is obtained using low grades of cork customarily used for grips. If necessary, the low grade cork may be processed to fill in any cracks, gaps or other inconsistencies which may be present, with cork powder or similar filler material. Alternatively, synthesized cork which is formed by cork powder and an appropriate binder may be used instead of low grade cork. The outer layer 52 is formed from a ribbon-like cork member which is obtained by processing high grade cork which is of a grade finer than the low grade cork used for the base layer 51. The ribbon-like cork member is initially formed into the shape of a long thin ribbon.

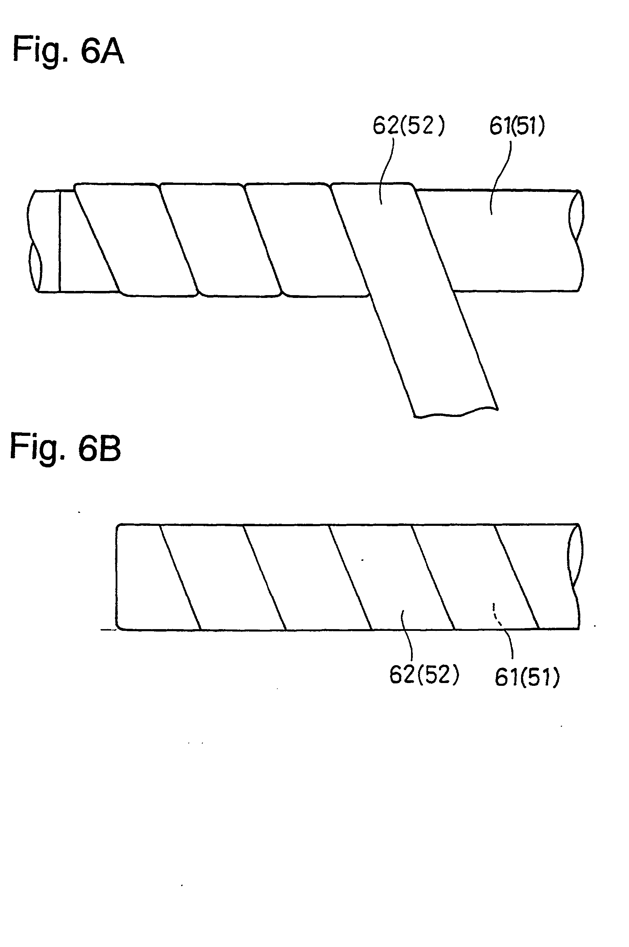

The grip 43 is manufactured in the following manner, as shown in Figs. 6A and 6B.

First, a low grade of cork material is obtained by stripping bark from a tree and pressing the bark into the shape of a board. The cork board is cut or punched to form predetermined cylindrical shapes, thereby defining a base cork member 61. The base cork member 61 is made of low grade cork described above, not high grade cork.

High grade cork material is obtained by peeling bark from a tree and pressing the bark into the shape of a board. The high grade cork board is processed to form an elongated ribbon which defines cork ribbon material 62. As shown in Fig. 6A, the cork ribbon material 62 is thereafter wound in spiral pattern around an outer peripheral surface of the base cork member 61, bonded by an adhesive or the like and accordingly fixed to the base cork member 61, as shown in Fig. 6A. Thereafter, as shown in Fig. 6B, the outer surface of the cork ribbon material 62 is processed, for instance by smoothing or otherwise treating, then the cork material 61 is cut into a predetermined length, whereby the grip 43 is completely formed and ready for installation on a golf club.

The grip 43 of a golf club having such a structure which includes the outer cork layer part 52 made from high grade cork wound around and fixed to the outer peripheral surface of the base layer 51 provides a grip that has superior elasticity and exhibits an excellent grip feel when held. Further, the grip 43 has an attractive and natural appearance, as well as an improved design. In addition, the outer layer 52 is formed by winding the cork ribbon material in spiral, where the cork ribbon material was processed into a sheet material, so that the material is easier to use in the manufacturing process for forming the grip 43.

### Alternate Embodiments

(a) The grip according to the present invention is not limitedly used for a fishing rod, a golf club, etc., but is applicable to a tennis racket, a walking stick or other implements, sports related or other, where a cork handle is advantageous.
(b) The cork materials used to form the outer layer may be selected from any of a variety of grades of cork, depending upon the implement to be provided with the cork grip. For instance, in some applications, a grade of cork slightly less that higher grades of high-grade of cork might be satisfactory for the outer layer of cork where feel is important, but appearance may be of lesser importance.

Thus, according to the present invention, since an outer layer of a grip is made of a high grade cork material that is disposed about an outer peripheral surface of a cork base layer, where the base layer is made of a low grade of cork material, the grip still exhibits a large elasticity, has a beautiful appearance and provides a desirable grip feeling at a relatively inexpensive cost.

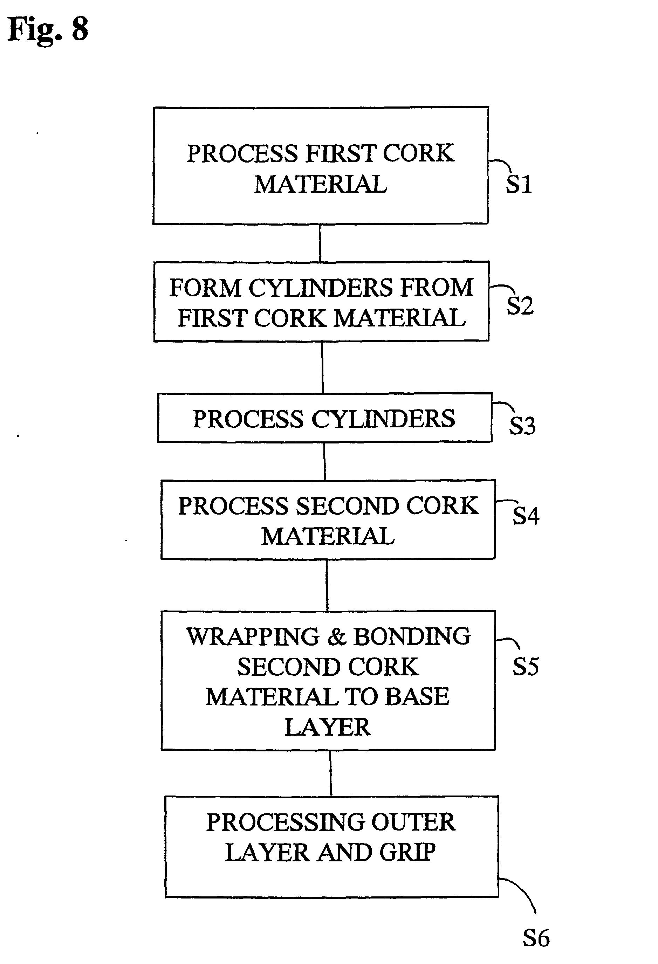

Fig. 8 is a block diagram showing steps for producing cork grips for handle portions of implements in a manufacturing process in accordance with the present invention. In a first step S1, a first cork material is processed to form sheets or blocks of cork material, such as the sheets 70 shown in Fig. 7. In a second step S2, the sheets of cork material are punched or cut to form cylinders of the first cork material, such as the cylinders 31 depicted in Fig. 3A.

In a third step S3, the cylinders 31 are processed in any of a variety of ways. For instance, a plurality of cylinders 31 are fixed, bonded or otherwise adhered together to form elongated cylindrical bodies, for instance, as is depicted in Fig. 3B, thus defining a base layer of cork material. Further in the third step S3, the cylinders 31 may be further processed to fill in any chips, voids or other inconsistencies, such that the cylinders 31 defining the base layer (as depicted in Fig. 3B) have a generally uniform surface consistency and generally smooth surface. It should be understood that cork naturally has minute openings, minute cracks and other minute inconsistencies in any outer surface thereof. The surface processing in step S3 is not intended to correct such imperfections, but rather are for the purposes of making the overall surface of the cylinders 31 consistent and uniformly resilient.

In a fourth step S4, a second cork material is processed to form sheets. The second cork material is preferably a high grade cork having generally consistent overall features with no noticeable imperfections, no chips missing and no gaps, and having a general uniform flexibility and resiliency. The first cork material, on the other hand may be of a low grade that includes missing chips, gaps and other imperfections that are repaired, as discussed above in the third step S3.

Also in the fourth step S4, the sheets of high grade cork material may be further formed into either one of two possible configurations. In a first configuration, the sheets may be left as sheets, cut to a predetermined width for wrapping around the base layer, as is described in greater detail below with respect to step S5.

In a second configuration, the sheets of cork material may be formed into elongated ribbons for wrapping, as is described in greater detail below with respect to step S5.

In a fifth step S5, the high grade cork material is wrapped around the base layer made of the cylinders 31. The high grade cork material, as described above with respect to step S4, may be in sheet form or ribbon form. The ribbon of high grade cork material is wrapped around the base layer in a spiral as depicted in Figs. 6A and 6B to form a specific spiral pattern. If the high grade cork material is in sheet form, the sheets are wrapped and cut to form cylindric shaped layers on the base layer, as is depicted in Figs. 3C and 3D. Regardless of the form of the high grade cork material, in step S5, the high grade cork material is bonded, adhered or otherwise permanently fixed to the base layer to form a grip.

In a next step S6, the grip having a base layer within, surrounded by the high grade cork, undergoes final processing. The final processing can include any of a variety of processing steps. For instance, the surface of the high grade cork may need to be treated, smoothed out or otherwise treated to enhance the appearance and feel of the formed grip. Further, the formed grip is cut to size and mounted on a handle portion of an implement such as a golf club or a fishing rod.

In should be understood that the grip formed in the above described steps may be installed on any of a variety of implements such as fishing related equipment, golf clubs, tennis rackets, racquetball rackets, polo mallets, etc. Further, the grip of the present invention may also be used on implements other than sports related implements, for instance, on bicycle handles or handles of fine tools or instruments.

Various details of the invention may be changed without departing from its scope. Furthermore, the foregoing description of the embodiments according to the present invention is provided for the purpose of illustration only, and not for the purpose of limiting the invention as defined by the appended claims.

## Claims

1. A grip (4;6;43) for a handle portion of an implement, said grip (4;6;43) comprising:
a base layer (21;23;51) fixable to the handle portion of the implement, said base layer (21;23;51) being formed of a first cork material; and
an outer layer (22;24;52) fixed to an outer peripheral surface of said base layer (21;23;51), said outer layer (22;24;52) being formed of a second cork material
**characterised in that** said outer layer (22;24;52) being smooth and **in that** said second cork material is a high grade cork material and said first cork material is a low grade cork material.

2. A grip (4;6;43) as claimed in claim 1, wherein said second cork material is wound in a spiral pattern about said outer peripheral surface of said base layer (21;23;51).

3. A grip (4;6;43) as claimed in any preceding claim, wherein said second cork material is wound around said outer peripheral surface of said base layer (21;23;51) forming at least one cylinder of said second cork material about said outer peripheral surface of said base layer (21;23;51).

4. A grip (4;6;43) as claimed in any preceding claim, wherein the implement is a sports related implement.

5. A grip (4;6;43) as claimed in claim 4, wherein the implement is a golf club.

6. A grip (4;6;43) as claimed in claim 4, wherein the implement is a fishing rod.

7. A sports related implement comprising;
a grip as claimed in any of claims 1 to 6.

8. A sports related implement as claimed in claim 7, wherein said second cork material is wound in a spiral pattern about said outer peripheral surface of said base layer (21;23;51).

9. A sports related implement as claimed in claim 7 or claim 8, wherein said second cork material is wound around said outer peripheral surface of said base layer (21;23;51) forming at least one cylinder of said cork material about said outer peripheral surface of said base layer (21;23;51).

10. A sports related implement as claimed in any of claims 7 to 9, wherein said implement is a golf club.

11. A sports related implement as claimed in any of claims 7 to 9 wherein said implement is a fishing rod.

12. A method for forming a grip (4;6;43) on a handle portion of an implement, said method comprising;
forming a base layer (21;23;51) from a first cork material into a cylinder-like shaped member;
forming a sheet of cork material from a second cork material;
wrapping the second cork material around the base layer (21;23;51) and bonding the second cork material to the base layer (21;23;51) to form a smooth outer layer (22;24;52);
**characterised in that** the second cork material is a high grade cork material and the first cork material is a low grade cork material.

13. A method as claimed in claim 12, wherein said step for forming the base layer (21;23;51), a plurality of cylinder-like shaped members are adhered to each other in an axial direction to form the base layer (21;23;51) having a cylindric shape.

14. A method as claimed in claim 12 or claim 13, wherein said step for forming the sheet of cork material from the second includes a step of forming the sheet into a ribbon of cork material, and in said wrapping step, the ribbon of cork material is wound around the base layer (21;23;51) in a spiral pattern.

## Patentansprüche

1. Ein Griff (4; 6; 43) für einen Handstücksabschnitt eines Gerätes, wobei der Griff (4; 6; 43) Folgendes beinhaltet:
eine Basisschicht (21; 23; 51), die an dem Handstücksabschnitt des Gerätes fixiert werden kann, wobei die Basisschicht (21; 23; 51) aus einem ersten Korkmaterial gebildet ist; und
eine äußere Schicht (22; 24; 52), die an einer äußeren peripheren Oberfläche der Basisschicht (21; 23; 51) fixiert ist, wobei die äußere Schicht (22; 24; 52) aus einem zweiten Korkmaterial gebildet ist;
**dadurch gekennzeichnet, dass** die äußere Schicht (22; 24; 52) glatt ist und dass das zweite Korkmaterial ein Korkmaterial hohen Grades und das erste Korkmaterial ein Korkmaterial niedrigen Grades ist.

2. Griff (4; 6; 43) gemäß Anspruch 1, wobei das zweite Korkmaterial in einem Spiralmuster um die äußere periphere Oberfläche der Basisschicht (21; 23; 51) gewickelt ist.

3. Griff (4; 6; 43) gemäß einem der vorhergehenden Ansprüche, wobei das zweite Korkmaterial um die äußere periphere Oberfläche der Basisschicht (21; 23; 51) gewickelt ist und mindestens einen Zylinder aus dem zweiten Korkmaterial um die äußere periphere Oberfläche der Basisschicht (21; 23; 51) bildet.

4. Griff (4; 6; 43) gemäß einem der vorhergehenden Ansprüche, wobei das Gerät ein Sportgerät ist.

5. Griff (4; 6; 43) gemäß Anspruch 4, wobei das Gerät ein Golfschläger ist.

6. Griff (4; 6; 43) gemäß Anspruch 4, wobei das Gerät eine Angelrute ist.

7. Ein Sportgerät, das Folgendes beinhaltet:
einen Griff gemäß einem der Ansprüche 1 bis 6.

8. Sportgerät gemäß Anspruch 7, wobei das zweite Korkmaterial in einem Spiralmuster um die äußere periphere Oberfläche der Basisschicht (21; 23; 51) gewickelt ist.

9. Sportgerät gemäß Anspruch 7 oder Anspruch 8, wobei das zweite Korkmaterial um die äußere periphere Oberfläche der Basisschicht (21; 23; 51) gewickelt ist und mindestens einen Zylinder aus dem Korkmaterial um die äußere periphere Oberfläche der Basisschicht (21; 23; 51) bildet.

10. Sportgerät gemäß einem der Ansprüche 7 bis 9, wobei das Gerät ein Golfschläger ist.

11. Sportgerät gemäß einem der Ansprüche 7 bis 9, wobei das Gerät eine Angelrute ist.

12. Ein Verfahren zum Bilden eines Griffs (4; 6; 43) auf einem Handstücksabschnitt eines Gerätes, wobei das Verfahren Folgendes beinhaltet:
Bilden einer Basisschicht (21; 23; 51) aus einem ersten Korkmaterial zu einem zylinderartig geformten Element;
Bilden einer Platte aus Korkmaterial aus einem zweiten Korkmaterial;
Schlingen des zweiten Korkmaterials um die Basisschicht (21; 23; 51) und Blnden des zweiten Korkmaterials an die Basisschicht (21; 23; 51), um eine glatte äußere Schicht (22; 24; 52) zu bilden;
**dadurch gekennzeichnet, dass** das zweite Korkmaterial ein Korkmaterial hohen Grades und das erste Korkmaterial ein Korkmaterial niedrigen Grades ist.

13. Verfahren gemäß Anspruch 12, wobei in dem Schritt des Bildens der Basisschicht (21; 23; 51) eine Vielzahl von zylinderartig geformten Elementen in einer axialen Richtung aneinander geklebt werden, um die Basisschicht (21; 23; 51) mit einer Zylinderform zu bilden.

14. Verfahren gemäß Anspruch 12 oder Anspruch 13, wobei der Schritt zum Bilden der Platte von Korkmaterial aus dem zweiten Korkmaterial einen Schritt des Bildens der Platte zu einem Band von Korkmaterial umfasst und das Band aus Korkmaterial in dem Schlingschritt in einem Spiralmuster um die Basisschicht (21; 23; 51) gewickelt wird.

## Revendications

1. Une poignée (4 ; 6 ; 43) pour une portion formant manche d'un outil, ladite poignée (4 ; 6 ; 43) comportant :
une couche de base (21 ; 23 ; 51) pouvant être fixée sur la portion formant manche de l'outil, ladite couche de base (21 ; 23 ; 51) étant formée en un premier matériau en liège ; et
une couche externe (22 ; 24 ; 52) fixée sur une surface périphérique externe de ladite couche de base (21 ; 23 ; 51), ladite couche externe (22 ; 24 ; 52) étant formée en un deuxième matériau en liège ;
**caractérisée en ce que** ladite couche externe (22 ; 24 ; 52) est lisse et **en ce que** ledit deuxième matériau en liège est un matériau en liège de grade supérieur et ledit premier matériau en liège est un matériau en liège de grade inférieur.

2. Une poignée (4 ; 6 ; 43) telle que revendiquée dans la revendication 1, dans laquelle ledit deuxième matériau en liège est enroulé en un motif en spirale autour de ladite surface périphérique externe de ladite couche de base (21 ; 23 ; 51).

3. Une poignée (4 ; 6 ; 43) telle que revendiquée dans n'importe quelle revendication précédente, dans laquelle ledit deuxième matériau en liège est enroulé autour de ladite surface périphérique externe de ladite couche de base (21 ; 23 ; 51) formant au moins un cylindre en dit deuxième matériau en liège autour de ladite surface périphérique externe de ladite couche de base (21 ; 23 ; 51).

4. Une poignée (4 ; 6 ; 43) telle que revendiquée dans n'importe quelle revendication précédente, dans laquelle l'outil est un outil relatif au sport.

5. Une poignée (4 ; 6 ; 43) telle que revendiquée dans la revendication 4, dans laquelle l'outil est un club de golf.

6. Une poignée (4 ; 6 ; 43) telle que revendiquée dans la revendication 4, dans laquelle l'outil est une canne à pêche.

7. Un outil relatif au sport comportant :
une poignée telle que revendiquée dans n'importe lesquelles des revendications 1 à 6.

8. Un outil relatif au sport tel que revendiqué dans la revendication 7, dans lequel ledit deuxième matériau en liège est enroulé en un motif en spirale autour de ladite surface périphérique externe de ladite couche de base (21 ; 23 ; 51).

9. Un outil relatif au sport tel que revendiqué dans la revendication 7 ou la revendication 8, dans lequel ledit deuxième matériau en liège est enroulé autour de ladite surface périphérique externe de ladite couche de base (21 ; 23 ; 51) formant au moins un cylindre en dit deuxième matériau en liège autour de ladite surface périphérique externe de ladite couche de base (21 ; 23 ; 51).

10. Un outil relatif au sport tel que revendiqué dans n'importe lesquelles des revendications 7 à 9, dans lequel ledit outil est un club de golf.

11. Un outil relatif au sport tel que revendiqué dans n'importe lesquelles des revendications 7 à 9 dans lequel ledit outil est une canne à pêche.

12. Une méthode destinée à former une poignée (4 ; 6 ; 43) sur une portion formant manche d'un outil, ladite méthode comportant :
former une couche de base (21 ; 23 ; 51) à partir d'un premier matériau en liège en un élément configuré en cylindre ;
former une feuille de matériau en liège à partir d'un deuxième matériau en liège ;
envelopper la couche de base (21 ; 23 ; 51) avec le deuxième matériau en liège et coller le deuxième matériau en liège à la couche de base (21 ; 23 ; 51) pour former une couche externe lisse (22 ; 24 ; 52) ;
**caractérisée en ce que** le deuxième matériau en liège est un matériau en liège de grade supérieur et le premier matériau en liège est un matériau en liège de grade inférieur.

13. Une méthode telle que revendiquée dans la revendication 12, dans laquelle dans ladite étape destinée à former la couche de base (21 ; 23 ; 51), une pluralité d'éléments configurés en cylindres adhèrent les uns aux autres dans un sens axial pour former la couche de base (21 ; 23 ; 51) ayant une configuration cylindrique.

14. Une méthode telle que revendiquée dans la revendication 12 ou la revendication 13, dans laquelle ladite étape destinée à former la feuille de matériau en liège à partir du deuxième matériau en liège comprend une étape consistant à former la feuille en un ruban de matériau en liège, et dans ladite étape d'enveloppement, le ruban de matériau en liège est enroulé autour de la couche de base (21 ; 23 ; 51) en motif en spirale.
